# EUROPÄISCHE PATENTSCHRIFT

(11) **EP 0 902 600 B1**
(45) Veröffentlichungstag und Bekanntmachung des Hinweises auf die Patenterteilung: **25.07.2001**
(21) Anmeldenummer: 98440196.8
(22) Anmeldetag: 07.09.1998
(51) Int. Cl.: H04Q 11/04, H04L 12/24

(54) **Verfahren zum Einrichten von logischen Verbindungen in einem synchronen digitalen Nachrichtenübertragungsnetz, Netzelement und Managementsystem**
Method for establishing logical connections in a synchronous digital data communication network , network element and management system
Procédé d'établissement de connexions logiques dans un réseau de communication de données synchrone et digitale, l'élément de réseau et système de gestion

(30) Priorität: 12.09.1997 DE 19740106
(43) Veröffentlichungstag der Anmeldung: 17.03.1999
(73) Patentinhaber: ALCATEL, 75088 Paris (FR)
(72) Erfinder: Heuer, Volkmar, 71254 Ditzingen (DE)
(74) Vertreter: Brose, Gerhard, Dipl.-Ing.

(56) Entgegenhaltungen:
- WO-A-97/04603
- CAMPBELL L H ET AL: "A LAYERED APPROACH TO NETWORK MANAGEMENT CONTROL" PROCEEDINGS OF THE NETWORK OPERATIONS AND MANAGEMENT SYMPOSIUM (NOM, MEMPHIS, APR. 6 - 9, 1992, Bd. 1, 1. Januar 1992, Seiten 46-56, XP000344747 INSTITUTE OF ELECTRICAL AND ELECTRONICS ENGINEERS
- SHAYGAN KHERADPIR ET AL: "PERFORMANCE MANAGEMENT IN SONET-BASED MULTI-SERVICE NETWORKS" COUNTDOWN TO THE NEW MILENNIUM, PHOENIX, DEC. 2 - 5, 1991, Bd. 2, 2. Dezember 1991, Seiten 1406-1411, XP000332882 INSTITUTE OF ELECTRICAL AND ELECTRONICS ENGINEERS

## Beschreibung

Die Erfindung betrifft ein Verfahren zum Einrichten von logischen Verbindungen in einem synchronen digitalen Nachrichtenübertragungsnetz nach Anspruch 1 sowie ein Netzelement für ein synchrones digitales Nachrichtenübertragungsnetz nach Anspruch 6 und ein Managementsystem nach Anspruch 8.

Datenpakete, die z.B. aus lokalen Datennetzen stammen, werden über Datennetze zu entsprechenden Adressaten übertragen. Solche Datenpakete stammen insbesondere von Anwendungen des Internets, sind noch dem Internet-Protokoll (IP) aufgebaut und besitzen eine Absender- und eine Ziel-IP-Adresse. Als Übertragungsmedium (OSI-Layer 1) für Datennetze bei Weitbereichsdatenübertragung werden synchrone digitale Nachrichtenübertragungsnetze eingesetzt, die nach den SDH- oder SONET-Standards und -Empfehlungen arbeiten (SDH: Synchronous Digital Hierarchy, SONET: Synchronous Optical Network). Dies geht z.B. aus RFC1619 (W. Simpson, Request for Comments 1619, Internet Engineering Task Force, Network Working Group, May 1994) hervor, wo vorgeschlagen wird, für Punkt-zu-Punkt-Verbindungen die Datenpakete direkt in synchrone Transportmodule (STM-N) von SDH oder synchrone Transportsignale (STS-N) von SONET zu verpacken.

In synchronen digitalen Nachrichtenübertragungsnetzen können virtuelle, d.h. logische Verbindungen zwischen Netzelementen des Netzes geschaltet werden. Dies wird manuell mit Hilfe eines Managementsystemes vorgenommen. Die einmal geschalteten logischen Verbindungen werden dann von Routern verschiedener Datennetze, die den Zugang zu dem synchronen digitalen Nachrichtenübertragungsnetz herstellen, zur Übertragung von Datenpaketen genutzt.

Da inbesondere Anwendungen des Internets zeitlich stark variierende Datenmengen produzieren (zwischen 0 Bit/s und einigen MBit/s), die in Form von IP-Datenpaketen über das synchrone digitale Nachrichtenübertragungsnetz zu übertragen sind, besteht der Nachteil, daß entweder große Übertragungskapazitäten in dem Nachrichtenübertragungsnetz bereitgehalten werden müssen, die dann die meiste Zeit ungenützt bleiben, oder daß Engpässe bei der Übertragung auftreten, wenn mehrere Nutzer gleichzeitig große Datenmengen versenden wollen.

Bei einem anderen Konzept werden IP-Pakete zunächst in ATM-Zellen verpackt und anschließend über virtuelle Übertragungungskanäle durch ein synchrones digitales Nachrichtenübertragungsnetz (SDH oder SONET) übertragen. In einem Artikel der Fa. Ipsilon Networks ("IP Switching: The Intelligence of Routing, the Performance of Switching", Ipsilon Technical White Paper on IP Switching, Feb. 1996, abrufbar im Internet unter http://www.ipsilon.com/productinfo/wp-ipswitch.html) wird ein Gerät (IP-Switch) vorgestellt, welches die Funktion eines IP-Routers und eines ATM-Switches kombiniert. Es ist in der Lage längere Folgen von Datenpaketen mit gleicher Absender- und Zieladresse, sogenannte *flows,* mittels eines Adressmonitors zu identifizieren und für diese geeignete geräteinterne Verbindungen zu schalten. Dadurch wird der Durchsatz an Datenpaketen durch den IP-Switch erhöht und die mittlere Schaltzeit verkürzt. Auch hier besteht der Nachteil, daß nur fest vorgegebene logische Verbindungen genutzt werden können, die je nach aktueller Nutzlast entweder unter- oder überdimensioniert sind.

In einem theoretischen Artikel von L.H. Campell et al., "A Layered Approach to Network Management Control", Proceedings of the Network Operations and Management Symposium, Nom, Memphis, 6.-9. April 1992, IEEE, Bd. 1, 1.Januar 1992, Seiten 46-56, wird für die Verwaltung eines SDH-Netzwerkes ein mehrschichtiger Ansatz vorgeschlagen. Eine als Path Configuration Sublayer bezeichnete Verwaltungsschicht betrachtet das Netzwerk als eine Vielzahl von logischen Verbindungen zwischen Netzelementen. In dieser Verwaltungsschicht werden Rekonfigurationen der logischen Verbindungen zum Zwecke des Bandbreiten-Managements durchgeführt. In einer anderen Verwaltungsschicht, dem Traffic Configuration Sublayer, wird die Vermittlung von Anrufen durchgeführt. In dieser Schicht wird auch eine Überwachungs- und Verkehrsstatistikfunktion ausgeführt. Der Artikel schlägt vor, daß Überwachungsergebnisse des Traffic Configuration Sublayer verwendet werden, um eine Optimierung der bestehenden logischen Verbindungen durchzuführen. Da das Netzwerk für heterogene Dienste wie PSTN, ISDN und CCS vorgesehen ist, erfordert dieser Vorschlag eine Kommunikation zwischen den verschiedenen Vermittlungseinrichtungen und dem darunterliegenden Transportnetz. Wie eine solche Kommunikation aussehen soll und wie die Überwachung der heterogenen Dienste aussehen soll, läßt der Artikel offen. Zudem erfordert der Vorschlag ein einheitliches Managementsystem für Vermittlungseinrichtungen und Netzelemente des Übertragungsnetzes. Ein solches einheitliches Managementsystem ist bislang jedoch nicht verfügbar.

Aus dem Artikel von S. Kheradpi et al., "Performance Management in SONET-Based Multi-Service Networks", Countdown to the New Millenium, Phoenix 2.-5. Dezember 1991, IEEE Bd. 2, 2. Dezember 1991, Seiten 1406-1411, ist ein Verfahren zur Echtzeit-Bandbreitenverwaltung in einem SONET-basierten Mehrdienste-Netzwerk bekannt. In dem Netzwerk werden unter Verwendung von virtuellen Containern (bei SONET als virtual Tributaries bezeichnet) logische Verbindungen eingerichtet, die periodisch aktualisiert werden, um die Verbindungen zu optimieren. Dazu werden intelligente Zugangseinheiten (Remote Unit) als Dienstezugang (Service Gateway) verwendet, die ankommende Verbindungen und Daten zählen (Source Destination arrival counts) und aufgrund der Zählung Quelle/Senke-Bandbreitenanforderungen (Source Destination bandwidth demands) an ein zentrales Netzwerkmanagement senden. Das Netzmanagement aktualisiert aufgrund der Anforderungen die bestehenden logischen Verbindungen regelmäßig. Das vorgeschlagene Konzept sieht ein einheitliches Managementsystem für Zugangsknoten, Vermittlungsstelleh und Netzelemente des darunterliegenden Transportnetzes (SONET) vor. Zudem werden intelligente Zugangsknoten für verschiedene Dienste wie 64kbps Sprache, Breitband-Videosignale, interaktive Graphik und Multimedia benötigt, die die Zählungen durchführen und die Bandbreitenanforderungen an das Netzmanagement senden.

Eine Aufgabe der Erfindung ist es, ein Verfahren anzugeben, mit dem ein synchrones digitales Nachrichtenübertragungsnetz besser an zeitlich variierenden Datenverkehr angepaßt werden kann. Weitere Aufgaben der Erfindung bestehen darin, ein Netzelement und ein Managementsystem für ein synchrones digitales Nachrichtenübertragungsnetz anzugeben, die zur Durchführung des Verfahrens geeignet sind.

Die Aufgabe wird hinsichtlich des Verfahrens gelöst durch die Merkmale des Anspruchs 1, hinsichtlich des Netzelementes durch die Merkmale des Anspruchs 6 und hinsichtlich des Managementsystems durch die Merkmale des Anspruchs 8.

Ein Vorteil der Erfindung ist, daß bestehende Übertragungskapazitäten bei der Übertragung von Datenpaketen besser ausgenutzt werden können und daß die Übertragungsrate im Mittel höher ist als bisher. Ein zusätzlicher Vorteil besteht darin, daß handelsübliche IP-Router verwendet werden können und daß für einen Nutzer, der Datenpakete über das Nachrichtenübertragungsnetz versenden will, keine Änderungen an seinen Geräten nötig sind.

Bei einer besonders vorteilhaften Ausführung wird zusätzlich eine Überwachung der Absenderadressen durchgeführt. Dadurch wird eine Vergebührung für übertragene Datenpakete möglich.

Gemäß einer weiteren vorteilhaften Ausführung der Erfindung ist es möglich, Datenpaketen mit vorbestimmten Absender- oder Zieladressen, beispielsweise allen Datenpaketen von oder für einen einzelnen, vorbestimmten Nutzer, eine höhere Priorität bei der Übertragung einzuräumen.

Im folgenden wird ein Ausführungsbeispiel der Erfindung anhand der Figuren 1 bis 2b beschrieben. Es zeigen:
- Figur 1: zwei über ein synchrones digitales Nachrichtenübertragungsnetz verbundene lokale Datennetze (LANs),
- Figur 2a: eine Konfiguration eines Nachrichtenübertragungsnetzes bei hohem Datenverkehr zwischen benachbarten Nutzern
- Figur 2b: eine Konfiguration eines Nachrichtenübertragungsnetzes bei hohem Datenverkehr zwischen entfernten Nutzern

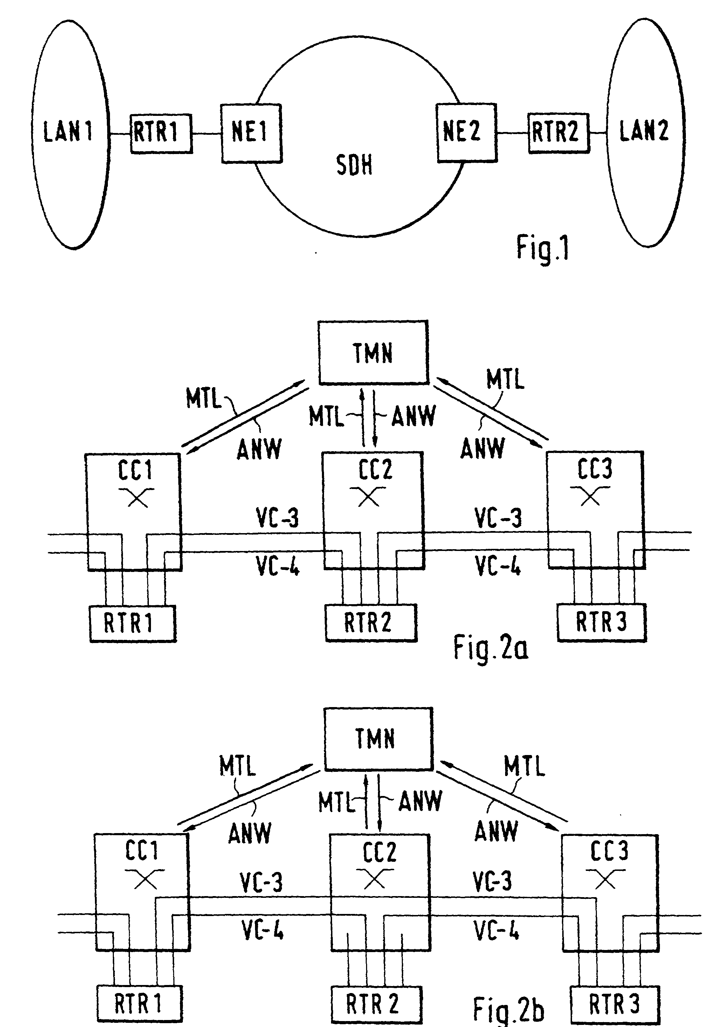

In Figur 1 sind zwei lokale Datennetze LAN1, LAN2 dargestellt, die über ein synchrones digitales Nachrichtenübertragungsnetz SDH miteinander verbunden sind und über das Nachrichtenübertragungsnetz Datenpakete austauschen können. Den Zugang der Datennetze zu dem Nachrichtenübertragungsnetz SDH bilden Router RTR1, RTR2. Diese sind jeweils mit einem Netzelement NE1, NE2 des Nachrichtenübertragungsnetzes verbunden. Zwischen diesen beiden Netzelementen NE1, NE2 besteht eine logischen Verbindung durch das Netz SDH, über die zu übertragende Datenpakete transportiert werden. Sollen Datenpakete von dem ersten lokalen Datennetz LAN1 zu dem zweiten lokalen Datennetz LAN2 übertragen werden, so werden diese in dem ersten Netzelement NE1 in synchrone Transportmodule oder Untereinheiten solcher synchroner Transportmodule, sogenannte virtuelle Container VC-N (bei SDH) oder Virtual Tributaries VT (bei SONET), verpackt und an das zweite Netzelement NE2 übertragen, wo sie wieder ausgepackt und an den angeschlossenen zweiten Router RTR2 weitergeleitet werden. Neben SDH- und SONET-Systemen sind auch Übertragungssysteme der plesiochronen digitalen Hierarchie (PDH) als synchrone digitale Nachrichtenübertragungsnetze im Sinne der Erfindung anzusehen.

Eine logischen Verbindung (oft auch als virtuelle Verbindung bezeichnet) entsteht, indem zwei Netzelemente periodisch Untereinheiten synchroner Transportmodule austauschen und die Untereinheiten dabei in anderen dazwischenliegenden Netzelementen des Nachrichtenübertragungsnetzes SDH ohne Umpacken durchgescholtet werden. Virtuelle Verbindungen werden von einem zentralen Netzwerkmanagementsystem des synchronen digitalen Nachrichtenübertragungsnetzes SDH eingerichtet und besitzen eine festgelegte Übertragungskapazität, d.h. es handelt sich um permanente virtuelle Verbindungen.

Ein Grundgedanke der Erfindung besteht darin, in dem Nachrichtenübertragungsnetz eine Überwachung der Zieladressen der zu transportierenden Datenpakete vorzusehen, daraus das Verkehrsaufkommen zwischen den einzelnen Netzelementen des Nachrichtenübertragungsnetzes zu bestimmen und basierend auf dem Verkehrsaufkommen eine optimierte Konfiguration logischer Verbindungen zu bestimmen, mit der das Netz aktualisiert wird. Dadurch wird das Netz an das aktuelle Verkehrsaufkommen angepaßt und die Übertragungskapazitäten des Netzes werden bestmöglich genutzt. Dieses Vorgehen bietet sich besonders bei IP-Datenpaketen von Internet-Anwendungen an, ist aber auch für Datenpaketen, die nach anderen Protokollen vorzugsweise der OSI-Schicht 3 aufgebaut sind wie beispielsweise dem IPX-Protokoll der Fa. Novell Inc., anwendbar.

Besonders vorteilhaft ist es, die Überwachung, der Zieladressen in zumindest einem Teil der Netzelemente des synchronen digitalen Nachrichtenübertragunsnetzes vorzunehmen. Dazu verfügen die Netzelemente über Mittel zum Überwachen der Zieladressen, z.B. über einen IP-Adressmonitor. Weiter ist es vorteilhaft, die Bestimmung des Verkehrsaufkommens und die Ermittlung einer optimierten Konfiguration in einem zentralen Managementsystems des Nachrichtenübertragungsnetzes vorzunehmen. Die Netzelemente teilen dem Managementsystem Ergebnisse der Überwachung der Zieladressen mit, aus denen das Managementsystem das Verkehrsaufkommen bestimmen kann. Über die Schnittstellen (z.B. eine Q-Schnittstelle), über die das Managementsystem mit den Netzelementen verbunden ist, werden dann Anweisungen an die Netzelemente übermittelt, betreffend logische Verbindungen, die von den Netzelementen zu schalten sind. Auf diese Weise richtet das Managementsystem die logischen Verbindungen entsprechend der optimierten Konfiguration in dem Netz ein.

Vorteilhaft ist es, periodisch eine optimierte Konfiguration zu bestimmen und die logischen Verbindungen periodisch zu aktualisieren. Dies kann je nach Anwendung beispielsweise täglich, stündlich oder auch minutenweise (pseudo online) erfolgen

Die Figuren 2a und 2b zeigen drei Netzelemente CC1-CC3 des synchronen digitalen Nachrichtenübertragungsnetz in einem Ausführungsbeispiel der Erfindung, wobei das erste und das zweite sowie das zweite und das dritte Netzelement miteinander physikalisch verbunden sind, z.B. durch Lichtwellenleiter (Glasfasern) oder Koax-Kabel. In der Figur sind jedoch nicht die physikalischen Verbindungen gezeigt. Bei den eingezeichneten Verbindungen handelt es sich um logische Verbindungen. Die drei Netzelemente sind jeweils über eine Schnittstelle mit einem zentralen Managementsystem TMN verbunden. Von diesem können sie Anweisungen erhalten, welche logischen Verbindungen intern zu schalten sind. An die drei Netzelemente CC1-CC3 ist jeweils ein Router RTR1-RTR3 angeschlossen, der den Zugang von einem nicht gezeigten lokalen Datennetz zu dem Nachrichtenübertragungsnetz bildet. Der Router leitet Datenpakete aus dem ihm jeweils angeschlossenen lokalen Datennetz, die für einen Adressaten in einem anderen lokalen Datennetz bestimmt sind an das ihm angeschlossene Netzelement weiter, wo die Datenpakete in Untereinheiten synchroner Transportmodule verpackt und über eine der logischen Verbindungen an ein weiteres Netzelement übertragen werden.

Erfindungsgemäß findet in dem sendenen Netzelement vor dem Einpacken eines Datenpaketes jeweils eine Überwachung der Zieladresse statt. Das Ergebnis dieser Überwachung wird in Form einer Mitteilung MTL an das zentrale Managementsystem TMN weitergeleitet. Dabei können auch die Ergebnisse der Überwachungen mehrerer zu übertragender Datenpakete zusammengefaßt und als eine Mitteilung MTL an das Managementsystem TMN gesendet werden.

Bei der in Figur 2a gezeigten Konfiguration bestehen zwischen zwei benachbarten Netzelementen jeweils zwei logische Verbindungen, während zwischen den zwei entfernten Netzelementen CC1 und CC3 keine logische Verbindung besteht. Diese Konfiguration ist geeignet bei hohem Datenverkehrsaufkommen zwischen den benachbarten Netzelementen CC1 und CC2 sowie CC2 und CC3. Verkehr zwischen entfernten Netzelementen, d.h. Datenpakete, die von CC1 zu CC3 gesendet werden sollen, müssen in CC2 ausgepackt, dem angeschlossenenen Router RTR2 zugeleitet, dort überprüft und an CC2 zurückgeleitet werden, von wo sie dann an CC3 übertragen werden können.

In allen drei Netzelementen findet eine Überwachung der Zieladressen aller vom jeweiligen Netzelement zu übertragenden Datenpakete statt. Das Ergebnis aller Überwachungen wird dem zentralen Managementsystem TMN als Mitteilungen MTL mitgeteilt. Das Managementsystem TMN ermittelt aus diesen Mitteilungen das aktuelle Verkehrsaufkommen und bestimmt daraus eine optimierte Konfiguration, mit der dann die logischen Verbindungen in dem Nachrichtenübertragungsnetz aktualisiert werden, indem das Managementsystem den Netzelementen Anweisungen ANW übermittelt, betreffend die logischen Verbindungen, die jedes Netzelement schalten soll.

Tritt nun verstärkter Datenverkehr zwischen den entfernten Netzelementen CC1 und CC3 auf, so bestimmt das Managementsystem TMN, daß für eine optimierte Konfiguration eine logische Verbindung zwischen den Netzelementen CC1 und CC3 erforderlich ist und sendet an die Netzelemente CC1-CC3 jeweils eine Anweisung ANW, die entsprechende Verbindung zu schalten, d.h. einen für die einzurichtende logische Verbindung repräsentativen virtuellen Container vom ersten Netzelement CC1 im zweiten Netzelement CC2 zum dritten CC3 durchzuschalten. Die optimierte Konfiguration für Datenverkehr zwischen den entfernten Netzelementen CC1 und CC3 ist in Figur 2b dargestellt. Durch die Optimierung wird der Datendurchsatz für IP-Pakete erhöht und die Durchlaufzeiten durch das Nachrichtenübertragungsnetz verringert.

Von den IP-Routern aus wäre eine solche Optimierung des Nachrichtenübertragungsnetzes nicht möglich, da diese keine Kenntnis über die Topologie des Netzes haben. Hingegen werden neu eingerichtete oder nicht mehr existierende logische Verbindungen von den Routern automatisch erkannt und genutzt beziehungsweise umgangen, beispielsweise nach dem sogenannten Polling-Verfahren. Daher können Router das nach dem erfindungsgemäßen Verfahren dynamisch optimierte Übertragungsnetz nach geringen Erkennungszeiten zum Routen nutzen.

Als vorteilhaft erweist sich auch, daß an den Zugängen des Nachrichtenübertragungsnetzes handelübliche Router mit gängigen Schittstellen eingesetzt werden können, beispielsweise mit E1, E3, E4, T1, T3, DS1, DS3, OC-n oder STM-n Schnittstellen. Auch an den Geräten der Nutzer sind keine Modifikationen erforderlich.

Günstig ist es, die Überwachung der Zieladressen in Cross-Connectoren durchzuführen, deren Aufgabe es ist, logische Verbindungen in einem synchronen digitalen Nachrichtenübertragungsnetz zu schalten.

Eine Weiterbildung der Erfindung besteht darin, nicht nur die Zieladressen der Datenpakete zu Überwachen, sondern auch die Absenderadressen. Auf diese Weise kann, z.B. durch einfaches Zählen der übertragenen Datenpakete für jeden Absender, eine Vergebührung für die Übertragung von Datenpaketen realisiert werden.

Gemäß einer anderen Weiterbildung der Erfindung werden nach vorbestimmten Kriterien ausgewählte Datenpakete bevorzugt, d.h. mit einer höheren Priorität behandelt. Solche Kriterien können insbesondere die Absender- oder Zieladressen der Datenpakete sein. Auf diese Weise kann ausgewählten Nutzern, die beispielsweise einen höheren Tarif bezahlen, eine sicherere und schnellere Datenverbindung zur Verfügung gestellt werden.

Eine andere Weiterbildung der Erfindung sieht vor, daß bei der Bestimmung der optimierten Konfiguration auch Erfahrungen über zyklisch auftretende Verkehrssituationen berücksichtigt werden. Solche Erfahrungen können z.B. durch statistische Auswertung über größere Zeitabschnitte oder auch aus dem typischen Verhalten einzelner Nutzer gewonnen werden. So kann z.B. aus Beobachtungen bekannt sein, daß zwei Nutzer immer Sonntag nachts einen Datenabgleich mit hohem Datenverkehrsaufkommen durchführen. Die für diese Transaktion regelmäßig erforderliche Übertragungskapazität wird dann von dem Managementsystem automatisch bereits kurz vor Beginn der Datenübertragung in Form einer logischen Verbindung zur Verfügung gestellt und nach Beendigung der Transaktion wieder abgebaut.

## Patentansprüche

1. Verfahren zum Einrichten von logischen Verbindungen in einem synchronen digitalen Nachrichtenübertragungsnetz (SDH) mit mehreren, 2 zumindest teilweise untereinander verbundenen Netzelementen (NE1, NE2; CC1-CC3), welches zum Übertragen von Datenpaketen, die nach dem Intemetprotokoll strukturiert sind und die jeweils eine Zieladresse enthalten, vorgesehen ist, wobei die logischen Verbindungen unter Verwendung von virtuellen Containern eingerichtet werden und die Datenpakete in den virtuellen Containern transportiert werden, mit folgenden Schritten:
- die Zieladressen der zu übertragenden Datenpakete werden in zumindest einem Netzelement (NE1, NE2; CC1-CC3) überwacht und Ergebnisse der Überwachung werden einem Managementsystem (TMN) des digitalen Nachrichtenübertragungsnetz (SDH) mitgeteilt;
- anhand der Überwachungsergebnisse wird von dem Managementsystem (TMN) ein aktuelles Verkehrsaufkommen zwischen den einzelnen Netzelementen (NE1, NE2; CC1-CC3) bestimmt;
- auf Grund des Verkehrsaufkommens und bereits bestehender logischer Verbindungen wird von dem Managementsystem (TMN) eine optimierte Konfiguration logischer Verbindungen bestimmt und
- die logischen Verbindungen werden in dem synchronen digitalen Nachrichtenübertragungsnetz (SDH) mit der optimierten Konfiguration aktualisiert.

2. Verfahren nach Anspruch 1, bei dem das Bestimmen der optimierten Konfiguration und das Aktualisieren der logischen Verbindungen periodisch erfolgt.

3. Verfahren nach Anspruch 1, bei dem zusätzlich eine Überwachung der Absenderadressen durchgeführt und daraus eine Vergebührung für übertragene Datenpakete bestimmt wird.

4. Verfahren nach Anspruch 1 oder 3, bei dem Datenpaketen mit vorbestimmten Absender- oder Zieladressen eine höhere Priorität bei der Übertragung eingeräumt wird.

5. Verfahren nach Anspruch 1, bei dem die Bestimmung der optimierten Konfiguration auch auf Grund von Erfahrungen über zyklisch auftretende Verkehrssituationen durchgeführt wird.

6. Netzelement (NE1, NE2; CC1-CC3) für ein synchrones digitales Nachrichtenübertragungsnetz (SDH), das mehrere zumindest teilweise verbundene Netzelemente enthält und zur Übertragung von Datenpaketen, die nach dem Internetprotokoll strukturiert sind und die jeweils eine Zieladresse enthalten, als Nutzlast virtueller Container vorgesehen ist, mit
- einem IP-Adressmonitor zur Überwachung der Zieladressen der zu übertragenden Datenpakete, und mit
- einer Schnittstelle zu einem Managementsystem (TMN), über die Mitteilungen (MTL) über die Ergebnisse der Überwachung der Zieladressen der zu übertragenden Datenpakete sendbar und über die Anweisungen (ANW) betreffend zu schaltende logische Verbindungen empfangbar sind, wobei das Managementsystem (TMN) zum Einrichten der logischen Verbindungen in dem Nachrichtenübertragungsnetz (SDH) vorgesehen ist.

7. Netzelement nach Anspruch 6, welches ein Crossconnect (CC1-CC3) ist.

8. Managementsystem (TMN) für ein synchrones digitales Nachrichtenübertragungsnetz (SDH)), das mehrere zumindest teilweise verbundene Netzelemente (NE1, NE2; CC1-CC3) enthält und zur Übertragung von Datenpaketen, die nach dem Internetprotokoll strukturiert sind und die jeweils eine Zieladresse enthalten, als Nutzlast virtueller Container vorgesehen ist, mit
- Schnittstellen zu den Netzelementen (NE1, NE2; CC1-CC3) des synchronen digitalen Nachrichtenübertragungsnetzes (SDH), über die Mitteilungen (MTL) über Ergebnisse einer Überwachung der Zieladressen der zu übertragenden Datenpakete empfangbar und über die Anweisungen (ANW) betreffend zu schaltende logische Verbindungen an die Netzelemente (NE1, NE2; CC1-CC3) sendbar sind,
- Mitteln zum Bestimmen eines aktuellen Verkehrsaufkommens zwischen den Netzelementen anhand der Mitteilungen (MTL) über die Ergebnisse der Überwachung der Zieladressen der zu übertragenden Datenpakete,
- Mitteln zum Bestimmen einer optimierten Konfiguration logischer Verbindungen zwischen den Netzelementen (NE1, NE2; CC1-CC3) aufgrund der bestehenden logischen Verbindungen und des Verkehrsaufkommens und
- Mitteln zum Senden von Anweisungen (ANW) betreffend die entsprechend der optimierten Konfiguration zu schaltenden logischen Verbindungen an die Netzelemente (NE1, NE2; CC1-CC3).

## Claims

1. A process for setting up logical connections in a synchronous digital communications transmission network (SDH) which comprises a plurality of network elements (NE1, NE2; CC1-CC3), at least partially connected to one another, and is provided for the transmission of data packets structured in accordance with the internet protocol and each containing a destination address, wherein the logical connections are set up using virtual containers and the data packets are transported in the virtual containers, comprising the following steps:
- the destination addresses of the data packets to be transmitted are monitored in at least one network element (NE1, NE2; CC1-CC3) and results of the monitoring are communicated to a management system (TMN) of the digital communications transmission network (SDH);
- on the basis of the monitoring results, a current traffic volume between the individual network elements (NE1, NE2; CC1-CC3) is determined by the management system (TMN);
- on the basis of the traffic volume and already existing logical connections, an optimised configuration of logical connections is determined by the management system (TMN) and
- the logical connections are updated in the synchronous digital communications transmission network (SDH) with the optimised configuration.

2. A process according to Claim 1, wherein the determination of the optimised configuration and the updating of the logical connections take place periodically.

3. A process according to Claim 1, wherein a monitoring of the source addresses additionally takes place and charge metering for transmitted data packets is determined therefrom.

4. A process according to Claim 1 or 3, wherein data packets with predetermined source or destination addresses are allocated a higher transmission priority.

5. A process according to Claim 1, wherein the determination of the optimised configuration also takes place on the basis of findings relating to cyclically occurring traffic situations.

6. A network element (NE1, NE2; CC1-CC3) for a synchronous digital communications transmission network (SDH) which comprises a plurality of at least partially connected network elements and is provided for the transmission of data packets; structured in accordance with the internet protocol and each containing a destination address, as payload of virtual containers with
- an IP address monitor for monitoring the destination addresses of the data packets to be transmitted and
- an interface to a management system (TMN) via which messages (MTL) relating to the results of the monitoring of the destination addresses of the data packets to be sent can be transmitted and instructions (ANW) relating to logical connections to be switched can be received, where the management system (TMN) is provided for setting up the logical connections in the communications transmission network (SDH).

7. A network element according to Claim 6 which is a cross-connect (CC1-CC3).

8. A management system (TMN) for a synchronous digital communications transmission network (SDH) which comprises a plurality of at least partially connected network elements (NE1, NE2; CC1-CC3) and is provided for the transmission of data packets, structured in accordance with the internet protocol and each containing a destination address, as payload of virtual containers with
- interfaces to the network elements (NE1, NE2; CC1-C3) of the synchronous digital communications transmission network (SDH) via which messages (MTL) relating to results of a monitoring of the destination addresses of the data packets to be transmitted can be received and via which instructions (ANW) relating to logical connections to be switched can be transmitted to the network elements (NE1, NE2; CC1-CC3),
- means for determining a current traffic volume between the network elements on the basis of the messages (MTL) relating to the results of the monitoring of the destination addresses of the data packets to be transmitted,
- means for determining an optimised configuration of logical connections between the network elements (NE1, NE2; CC1-CC3) on the basis of the existing logical connections and the traffic volume and
- means for sending the network elements (NE1, NE2; CC1-CC3) instructions (ANW) relating to the logical connections to be switched in accordance with the optimised configuration.

## Revendications

1. Procédé pour configurer des liaisons logiques dans un réseau numérique synchrone de transmission de messages (SDH), avec plusieurs éléments réseau reliée, au moins en partie, les uns aux autres (NE1, NE2, CC1-CC3), ledit réseau étant prévu pour transmettre des paquets de données structurés d'après le protocole Internet et contenant, à chaque fois, une adresse de destination, à l'occasion de quoi les liaisons logiques sont configurées en utilisant des récipients virtuels et les paquets de données sont acheminés dans lesdits récipients, les étapes étant les suivantes :
- les adresses de destination des paquets de données à transmettre sont contrôlées dans, pour le moins, un élément réseau (NE1, NE2, CC1-CC3) et les résultats relatifs au contrôle sont communiqués à un système de gestion (TMN) appartenant au réseau numérique synchrone de transmission de messages (SDH),
- le système de gestion (TMN) détermine, au moyen des résultats du contrôle, un débit, au moment donné, entre les différents éléments réseau (NE1, NE2, CC1-CC3),
- le système de gestion (TMN) détermine, sur la base du trafic et des liaisons logiques déjà existantes, une configuration optimale des liaisons logiques, et,
- les liaisons logiques sont mises à jour dans le réseau numérique synchrone de transmission de messages (SDH), avec la configuration optimisée.

2. Procédé selon la revendication 1, permettant de déterminer la configuration optimale et de mettre régulièrement à jour les liaisons logiques.

3. Procédé selon la revendication 1, permettant, en outre, de contrôler les adresses d'expédition, et par conséquent, de facturer les paquets de données transférés.

4. Procédé selon la revendication 1 ou 3, permettant, à l'occasion de la transmission, d'établir une priorité élevée pour des paquets de données dotés d'adresses de destination ou d'expédition pré-définies.

5. Procédé selon la revendication 1, permettant également de définir la configuration optimale à partir d'un historique portant sur des états de trafic survenant périodiquement.

6. Elément réseau (NE1, NE2, CC1-CC3) destiné à un réseau numérique synchrone de transmission de messages (SDH) comportant plusieurs éléments réseau reliés, au moins, en partie, les uns aux autres, et prévu, en tant que charge de service de récipient virtuel, pour transmettre des paquets de données, structurés suivant le protocole Internet et recevant à chaque fois une adresse de destination, doté :
- d'un moniteur d'adresses IP pour contrôler les adresses de destination des paquets de données à transférer, et,
- d'une interface vers un système de gestion (TMN) qui permet d'envoyer les messages (MTL) concernant les résultats du contrôle des adresses de destination des paquets de données à transmettre, et, de recevoir les instructions (ANW) concernant les liaisons logiques à commuter, le système de gestion (TMN) étant prévu pour configurer les liaisons logiques dans le réseau de transmission de messages (SDH).

7. Elément réseau selon la revendication 6, qui est un Crossconnect ("interconnecteur") (CC1-CC3).

8. Système de gestion (TMN) destiné à un réseau numérique synchrone de transmission de messages (SDH) comportant plusieurs éléments réseau reliés, au moins en partie, les uns aux autres, (NE1, NE2, CC1-CC3) et, prévu, en tant que charge de service de récipient virtuel, pour transmettre des paquets de données, structurés suivant le protocole Internet et recevant à chaque fois une adresse de destination, doté :
- d'interfaces vers les éléments réseau (NE1, NE2, CC1-CC3) du réseau numérique synchrone de transmission de messages (SDH) qui permettent de recevoir des messages (MTL) concernant les résultats d'un contrôle des adresses de destination des paquets de données à transmettre, et, d'envoyer les instructions (ANW) concernant les liaisons logiques à commuter au niveau des éléments réseau (NE1, NE2:, CC1-CC3),
- de moyens pour déterminer un volume de trafic au moment donné, intervenant entre des éléments réseau, au moyen de messages (MTL) inhérents aux résultats du contrôle des adresses de destination des paquets de données à transférer,
- de moyens pour déterminer une configuration optimale des liaisons logiques, entre les éléments réseau (NE1, NE2, CC1-CC3), sur la base des liaisons logiques existantes et du débit, et,
- de moyens pour envoyer des instructions (ANW) concernant les liaisons logiques à commuter en fonction de la configuration optimisée, au niveau des éléments réseau (NE1, NE2, CC1-CC3).
